# EUROPEAN PATENT APPLICATION

(11) **EP 2 365 286 A1**
(43) Date of publication of application: **14.09.2011**
(21) Application number: 10290125.3
(22) Date of filing: 11.03.2010
(51) Int. Cl.: G01C 21/36

(54) **Navigation system and method of operating a navigation system**

(71) Applicant: Alcatel- Lucent Shanghai Bell Co., Ltd, 75008 Paris (FR)
(72) Inventor: Domschitz, Peter, 70191 Stuttgart (DE); Tomsu, Marco, 71254 Ditzingen (DE); Schwan, Nico, 70197 Stuttgart (DE)
(74) Representative: Schäfer, Wolfgang

(57) **Abstract**

The invention relates to a navigation system (100) comprising user interface means (110) for providing navigation information (i_n) and additional information (i_a) to a user (200) of said navigation system (100), and processing means (120) for controlling the provisioning of said information (i_n, i_a) to the user (200) via said user interface means (110), wherein said navigation system (100) further comprises receiving means (130) for receiving information provisioning rules (R), which comprise information on how to provide said navigation information (i_n) and/or said additional information (i_a) to said user (1000), from a device (300) external to the navigation system (100), and wherein said processing means (120) are configured to control the provisioning of said navigation information (i_n) and/or said additional information (i_a) to said user (200) depending on said information provisioning rules (R) received from said external device (300).

## Description

### Field of the Invention

The invention relates to a navigation system for providing navigation information and additional information to a user of said navigation system.

The invention further relates to a method of operating a navigation system.

### Background

Navigation systems are used for guiding a user to a specified target location. For this purpose, common navigation systems are equipped with position determining means such as a GPS (global positioning system) and map data comprising topographical information and the like.

A user interface is employed to provide the user with navigation information which may e.g. comprise instructions which direction to take during navigation.

Additional information may also be provided to the user. Said additional information may e.g. comprise traffic information or other location-based information, i.e. information related to a current location of the navigation device. Additional information may also comprise non-location-based information.

It is an object of the present invention to provide an improved navigation system which enables a flexible presentation of information to the user.

### Summary

According to an embodiment of the present invention, this object is achieved by a navigation system comprising user interface means for providing navigation information and additional information to a user of said navigation system, and processing means for controlling the provisioning of said information to the user via said user interface means, wherein said navigation system further comprises receiving means for receiving information provisioning rules, which comprise information on how to provide said navigation information and/or said additional information to said user, from a device external to the navigation system, and wherein said processing means are configured to control the provisioning of said navigation information and/or said additional information to said user depending on said information provisioning rules received from said external device.

According to this embodiment, the way of provisioning navigation information and/or additional information may advantageously be influenced by a third party, i.e. the external device or an operator thereof. Thus, it is possible to modify an operation of the navigation device and its techniques for provisioning information to a user without user interaction or even without the user's knowledge and/or control.

A particularly efficient distribution of the information provisioning rules to one or more navigation devices according to the preceding embodiment is enabled by said receiving means comprising an interface capable of wireless data transmission with said external device. Said interface may e.g. employ per se known wireless data transmission methods such as according to the GSM (Global System for Mobile Communications), UMTS (Universal Mobile Telecommunications System), LTE (3GPP Long Term Evolution), WiMAX (Worldwide Interoperability for Microwave Access), Bluetooth or WLAN (Wireless Local Area Network) standard or a combination thereof.

Although wireless transmission is a particularly preferred embodiment, it is also possible to transmit the information provisioning rules to the navigation device by using wired communication techniques such as according to the USB (Universal Serial Bus), LAN (Local Area Network) standard.

The inventive navigation device may be configured as a standalone device or may be integrated in a specific target system, for example into a vehicle thus forming part of an in-car navigation system. In the latter case, existing communication infrastructure of the vehicle such as a CAN (Controller Area Network) bus or other suitable communication means may alternatively or additionally be employed to transmit the information provisioning rules from an external device to the navigation device. In these cases, the information provisioning rules may e.g. be transmitted and/or altered during a service event of the vehicle.

According to a further embodiment, a very intuitive provisioning of navigation information and additional information to a user is enabled by said user interface means comprising an interface for transmitting video and/or audio data to a video output device and/or an audio output device. Thus, conventional video and/or audio transmission formats may be employed to convey the navigation information and additional information to suitable output devices such as LCDs (Liquid Crystal Displays) (video) or loudspeakers (audio).

The functionality of the inventive navigation device may, as such, also be integrated into existing in-car systems. Such systems conventionally comprise some type of processing means such as a microcontroller or a digital signal processor (DSP) and a computer program executable on said processing means. Existing systems may be upgraded by the inventive functionality by adding a computer program which is programmed to execute the steps of the inventive method, cf. below.

If the navigation device according to the present embodiment is part of an in-car system, an existing video output device and/or existing audio output device of the vehicle may be employed to transform the video and/or audio data provided by the navigation device into a form suitable for a human user.

Obviously, to enable the inventive principle of remotely influencing a way of provisioning navigation information and additional information, the navigation device is not required to comprise a video output device and/or audio output device on its own. The navigation device may rather be combined with existing video output devices and/or audio output devices.

However, according to a further preferred embodiment, said navigation system comprises an integrated video output device and/or audio output device thus forming a standalone navigation device. Devices of this type are also called "personal navigation device" (PND) and may be used in a wide variety of application contexts. E.g., according to one embodiment, an inventive mobile PND may be used by pedestrians. Of course, such mobile PND is also suitable for in-car use, whereby navigation capabilities may be added to a vehicle that is not equipped with an integrated in-car navigation system.

As already explained above, the preferred embodiments of the navigation system comprise receiving means for receiving the information provisioning rules from an external device, which may also be arranged remotely from the navigation device. The information provisioning rules comprise information on how to provide navigation information and/or additional information to a user. More specifically, in the context of the present application, the term "information provisioning rules" denotes any form of information that is suitable for defining how the processing means of the navigation device provide said navigation information and/or said additional information to the user. For embodiments not comprising integrated output devices such as LCDs or loudspeakers, the step of "providing information to a user" also comprises providing respective data signals, which represent navigation information and additional information, to the user interface means.

For example, the information provisioning rules may define specific time periods or operational conditions of the navigation system or a target system (vehicle) in which a first algorithm is used for providing navigation information and additional information to the user. Such first algorithm may e.g. only enable navigation information to be provided. In this case, the processing means consequently only provide navigation information to the user, and the provisioning of additional information is prohibited. This first algorithm is particularly useful if a next navigation event is scheduled very soon, e.g. if some form of new navigation information such as a change of direction or the like, is to be provided to the user. In such situations, the output of additional information would only distract the user's attention from the new navigation information.

A second algorithm may be used if no navigation event is scheduled for the near future. In this case, additional information may be admitted to be provided to the user alternatively to or in addition to the navigation information. Since no navigation event is scheduled for the near future, there is no danger of distracting the user's attention from new navigation information. Such time periods may be used for presenting additional information to the user, wherein said additional information may e.g. comprise tourist information and other location-based information (information related to points of interest nearby the current position).

According to a further embodiment, a third algorithm may provide for determining the vehicle's speed and controlling the amount of additional data depending on the vehicle speed. If the speed is below a predetermined threshold of e.g. 5 km/h or lower, the navigation system may conclude that the vehicle is in a stop-and-go situation, e.g. caused by a traffic jam. In these situations, a larger amount of additional information may be presented to the user because navigation information will not be required soon and the user (driver) can at least partly focus on the additional information because the traffic situation does not require his full attention.

According to a further embodiment, said additional information comprises at least one of: location-based information, news, advertising.

According to a further embodiment, a format of said navigation information and/or said additional information comprises at least one of: text, still images, video, audio.

To enable a particularly seamless integration of navigation information and additional information, said processing means may be configured to blend in said additional information into said navigation information, which may in the case of video or still image information e.g. be accomplished by overlaying respective images or video signals. Audio information may be processed likewise.

A preferred embodiment proposes that said navigation system is configured to receive said additional information via said receiving means from an external device, which may be identical with the external device the information provisioning rules are received from. Thus, an operator of the external device(s) may provide location-based information, e.g. news or advertising. At the same time, the operator may configure the navigation device by means of the information provisioning rules. This way, the operator can e.g. influence how much and what type of advertising is provided in addition to "ordinary" navigation information.

According to a further embodiment, said processing means are configured to control the provisioning of said navigation information and/or said additional information to the user depending on further parameters of said navigation system, said parameters comprising at least one of:
- a current speed of said navigation system or of a target system (e.g., vehicle) comprising said navigation system,
- a position,
- map information of the navigation system on points of interest, parking lots, traffic signs and other location-based data provided for by the navigation system,
- a route destination and/or other elements of a current route specified for navigation,
- a time and/or date,
- a country or other legal environment the current position relates to,
- a time and/or distance to a next navigation event.

It is also possible to control the provisioning of said navigation information and/or said additional information to the user depending on further parameters such as weather conditions, transmission properties of the interface of the receiving means, and other parameters that may be gathered from a target system of the navigation system.

According to a further embodiment, said processing means are configured to control the provisioning of said navigation information and/or said additional information to said user depending on further rules, said further rules determining: a. that said navigation information is provisioned with a higher or lower degree of perceptibility for the user as compared to the additional information, b. if and where said additional information is to be embedded or blended in to the navigation information.

A further solution to the object of the present invention is given by a control unit for controlling at least one navigation system according to the present invention, wherein said control unit comprises an interface capable of wireless and/or wired data transmission with said navigation system, and wherein said control unit is configured to: a) transmit information provisioning rules, which comprise information on how to provide navigation information and/or additional information to a user of said navigation system, to said navigation system, and/or to b) alter information provisioning rules of said navigation system.

A further solution to the object of the present invention is given by a method of operating a navigation system comprising user interface means for providing navigation information and additional information to a user of said navigation system, and processing means for controlling the provisioning of said information to the user via said user interface means, wherein said navigation system receives information provisioning rules, which comprise information on how to provide said navigation information and/or said additional information to said user, from a device external to the navigation system, by means of receiving means, and wherein said processing means control the provisioning of said navigation information and/or said additional information to said user depending on said information provisioning rules received from said external device.

According to an embodiment, the navigation system may also receive said additional information via said receiving means from an external device, and said navigation system may at least temporarily store said additional information, e.g. for providing it to the user later on, for instance once such providing is allowed by the information provisioning rules, e.g. due to a low vehicle speed or the like.

According to a further embodiment, said processing means embed said additional information in said navigation information by overlaying respective video signals and/or audio signals corresponding to said additional information and said navigation information.

Further advantageous embodiments are given by the dependent claims.

### Brief Description of the Figures

Further aspects, features and embodiments of the present invention are given in the following detailed description with reference to the drawings, in which:
- Figure 1: schematically depicts a first embodiment of the navigation device,
- Figure 2: depicts a simplified flow chart of an embodiment of a method of operating a navigation system,
- Figure 3: schematically depicts a second embodiment of the navigation device,
- Figure 4: schematically depicts a third embodiment of the navigation device,
- Figure 5a, 5b: schematically depict a screen display obtained by means of further embodiments of the navigation device,
- Figure 6: schematically depicts a further embodiment of the navigation device.

### Description of the Embodiments

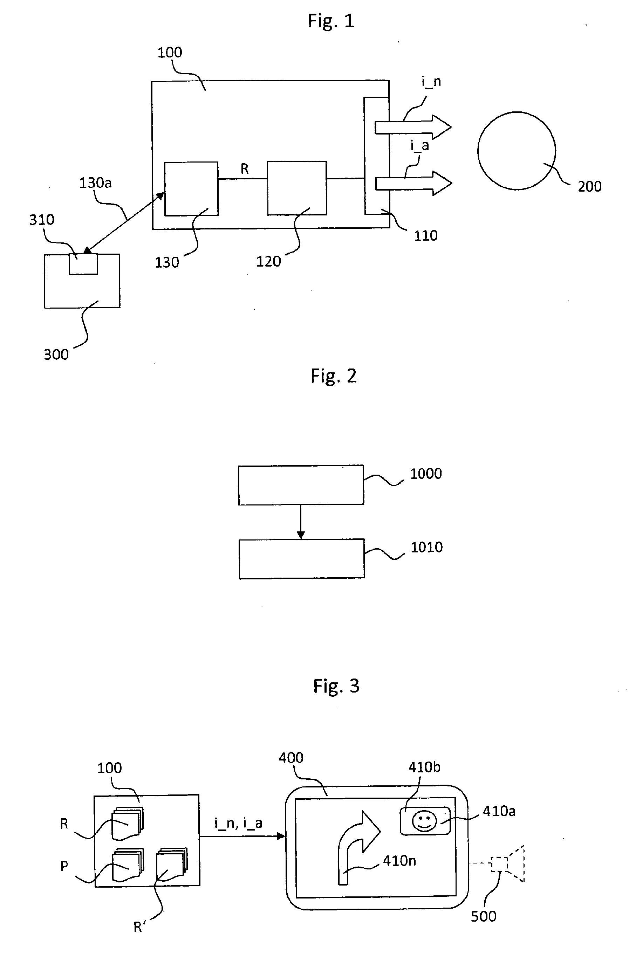

Figure 1 schematically depicts a first embodiment of a navigation device 100 according to the present invention. The navigation device 100 comprises user interface means 110 for providing navigation information i_n and additional information i_a to a user 200 of said navigation system 100.

Navigation information i_n may e.g. comprise instructions which direction to take during a navigation process and may generally be represented by text, still images, video, audio (i.e., speech).

Additional information in the sense of the present invention may e.g. comprise traffic information or other location-based information, i.e. information related to a current location of the navigation device. Additional information may also comprise non-location-based information. Preferably, the additional information may also comprise news and/or advertising.

The navigation system 100 further comprises processing means 120 for controlling the provisioning of said information i_n, i_a to the user 200 via said user interface means 110. The processing means may e.g. comprise a microcontroller and/or a DSP or an application specific integrated circuit (ASIC). The step of controlling the provisioning of said information i_n, i_a to the user 200 inter alia comprises determining the format, time constants and other parameters characterizing how and when said information i_n, i_a is provided. Thus, the processing means 120 can e.g. prohibit providing additional information i_a such as advertisements or it can define to periodically provide advertisements in time periods between the provisioning of navigation information.

The processing means 120 can also control the provisioning of information to the user 200 in a way which provides a predetermined amount of advertisements prior to providing any navigation information at all which increases the chance for the advertisements to be consumed by the user 200.

According to a preferred embodiment, said navigation system 100 comprises receiving means 130 for receiving information provisioning rules R from a device 300 external to the navigation system 100. The information provisioning rules R comprise information for the processing means 120 on how to provide said navigation information i_n and/or said additional information i_a to said user 200.

Said processing means 120 are configured to control the provisioning of said navigation information i_n and/or said additional information i_a to the user 200 depending on said information provisioning rules R received from said external device 300.

According to this embodiment, the way of provisioning navigation information i_n and/or additional information i_a may advantageously be influenced by a third party, i.e. the external device 300 or an operator thereof, respectively. Thus, it is possible to modify an operation of the navigation device 100 and its techniques for provisioning information to the user 200 without user interaction or even without the user's knowledge and/or control.

A particularly efficient distribution of the information provisioning rules R from the external device 300 to one or more navigation devices 100 according to the preceding embodiment is enabled by said receiving means 130 comprising an interface 130a capable of wireless data transmission with said external device 300. Said interface 130a may e.g. employ per se known wireless data transmission methods such as according to the GSM (Global System for Mobile Communications), UMTS (Universal Mobile Telecommunications System), LTE (3GPP Long Term Evolution), WiMAX (Worldwide Interoperability for Microwave Access), Bluetooth or WLAN (Wireless Local Area Network) standard or a combination thereof.

Although wireless transmission is a particularly preferred embodiment, it is also possible to transmit the information provisioning rules R to the navigation device 100 by using wired communication techniques such as according to the USB (Universal Serial Bus), LAN (Local Area Network) standard.

The inventive navigation device 100 may be configured as a standalone device or may be integrated in a specific target system, for example into a vehicle (not shown) thus forming part of an in-car navigation system. In the latter case, existing communication infrastructure of the vehicle such as a CAN (Controller Area Network) bus or other suitable communication means may alternatively or additionally be employed to transmit the information provisioning rules R from an external device 300 to the navigation device 100. In these cases, the information provisioning rules R may e.g. be transmitted and/or altered during a service event of the vehicle.

According to a further embodiment, a very intuitive provisioning of navigation information i_n and additional information i_a to a user 200 is enabled by said user interface means 110 comprising an interface for transmitting video and/or audio data to a video output device and/or an audio output device. Thus, conventional video and/or audio transmission formats may be employed to convey the navigation information and additional information to suitable output devices such as LCDs (Liquid Crystal Displays) (video) or loudspeakers (audio).

The functionality of the inventive navigation device 100 may, as such, also be integrated into existing in-car systems. Such systems conventionally comprise processing means such as a microcontroller or a digital signal processor (DSP) and a computer program executable on said processing means. Existing systems may be upgraded by the inventive functionality by adding a computer program which is programmed to execute the steps of the inventive method.

If the navigation device 100 according to the present embodiment is used as a part of an in-car system, an existing video output device and/or existing audio output device of the vehicle may be employed to transform the video and/or audio data provided by the navigation device 100 into a form suitable for the user 200.

Figure 2 depicts a simplified flow chart of an embodiment of the inventive method. In a first step 1000, said navigation system 100 (Figure 1) receives information provisioning rules R from the external device 300 already explained above. Upon receiving the information provisioning rules R from the external device 300, said processing means 120 (Figure 1) control the provisioning of said navigation information and/or said additional information to the user 200 depending on said information provisioning rules R, cf. step 1010.

Figure 3 depicts a further embodiment of the navigation device 100. In addition to using the information provisioning rules R received from the external device 300 (Figure 1), the navigation system 100 of Figure 3 is configured to also consider further parameters P for determining how to provide navigation information i_n and/or additional information i_a to the user 200. More specifically, its processing means are configured to control the provisioning of said navigation information i_n and/or said additional information i_a to a user also depending on the further parameters P, said parameters comprising at least one of:
- a current speed of said navigation system 100 or of a target system comprising said navigation system 100,
- a position,
- map information of the navigation system 100 on points of interest, parking lots, traffic signs and other location-based data provided for by the navigation system 100,
- a route destination and/or other elements of a current route specified for navigation,
- a time and/or date,
- a country or other legal environment the current position relates to,
- a time and/or distance to a next navigation event.

For instance, the navigation system 100 of Figure 3 may determine from its map information that its current position is close to a shopping center or respective parking lots thereof. Consequently, the navigation system may provide additional information in form of advertisements to the user, said additional information i_a being related to the shopping center or even specific shops thereof. As already explained above, the additional information i_a may be received from an external device 300, an operator of which might have an advertising contract with the shopping center for providing advertisements to the user 200 of the navigation system.

As depicted by Figure 3, the navigation system 100 is connected to a display device 400 that is suitable for displaying video data. The display device 400 may optionally be equipped with a loudspeaker system 500. The navigation system 100 may transmit navigation information i_n and additional information i_a such as advertisements and so on by using a conventional video and/or audio format which can be output by the devices 400, 500.

According to the embodiment of Figure 3, the navigation system 100 simultaneously provides navigation information and additional advertisement information in form of a corresponding video signal to the display device 400, which results in the display device 400 displaying both an arrow 410n representing the navigation information, more precisely a directional information for the user to turn right, and an advertisement 410a in a corner part 410b of the display screen.

Thus, the user is advantageously provided with navigation information while at the same time displaying advertisements 410a.

The specific details of the position of the advertisement 410a on the display 400 in relation to the navigation information may be stored in a configuration profile of the navigation system 100 or may also be part of the inventive information provisioning rules R. In this case, an operator of the external device 300 (Figure 1) may influence the layout of the display 400 even as far as the placement of navigation information and additional information is concerned.

Of course, the additional information may comprise various formats such as still image, text, speech or even video. When providing the additional information in form of speech, the additional information may even be output to the user in situations where the navigation system 100 requires a full screen display of navigation information on the display device 400.

According to a further embodiment, said processing means 120 (Figure 1) are configured to control the provisioning of said navigation information i_n and/or said additional information i_a to said user 200 depending on further rules R' (Figure 3), said further rules R' determining: a) that said navigation information i_n is provisioned with a higher or lower degree of perceptibility for the user 200 as compared to the additional information i_a, b) if and where said additional information i_a is to be embedded or blended in to the navigation information i-n.

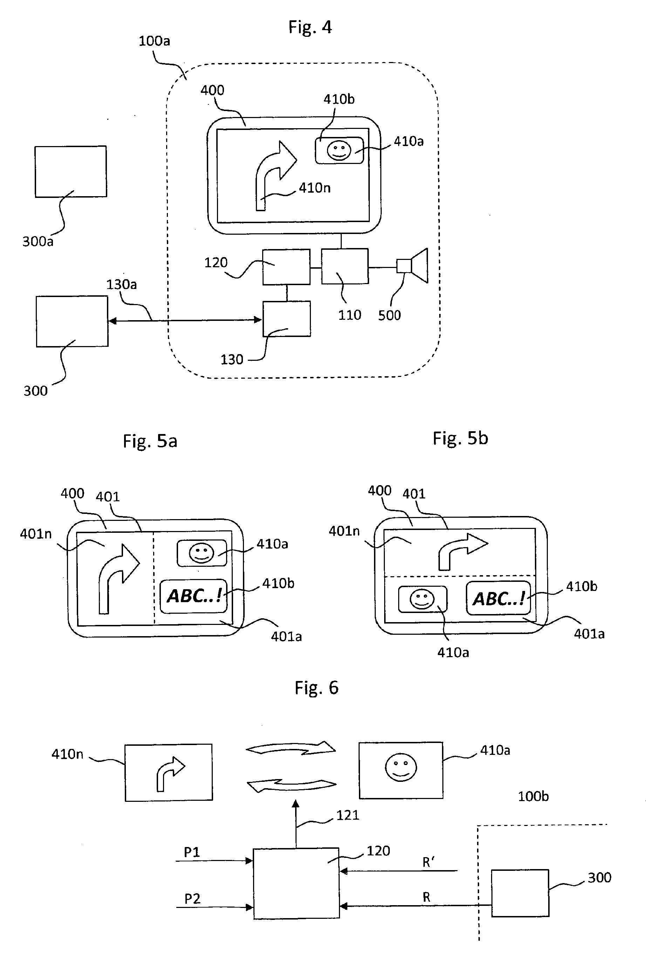

According to a further preferred embodiment depicted by Figure 4, the navigation system 100a comprises an integrated video output device 400 and/or audio output device 500 thus forming a standalone navigation device. A device of this type may also be called "personal navigation device" (PND) and may be used in a wide variety of application contexts. E.g., according to one embodiment, an inventive mobile PND 100a may be used by pedestrians. Of course, such mobile PND 100a is also suitable for in-car use, whereby navigation capabilities may be added to a vehicle that is not equipped with an integrated in-car navigation system.

As already explained above, the preferred embodiments of the navigation system 100, 100a comprise receiving means 130 for receiving the information provisioning rules R from an external device 300, which may also be arranged remotely from the navigation system 100, 100a. The information provisioning rules R comprise information on how to provide navigation information and/or additional information to a user. More specifically, in the context of the present application, the term "information provisioning rules" denotes any form of information that is suitable for defining how the processing means of the navigation device provide said navigation information and/or said additional information to the user. For embodiments not comprising integrated output devices such as LCDs or loudspeakers, the step of "providing information to a user" also comprises providing respective data signals, which represent navigation information and additional information, to the user interface means.

For example, the information provisioning rules R may define specific time periods or operational conditions of the navigation system or a target system (vehicle) in which a first algorithm is used for providing navigation information and additional information to the user. Such first algorithm may e.g. only enable navigation information to be provided. In this case, the processing means 120 consequently only provide navigation information to the user 200, and the provisioning of additional information is prohibited. This first algorithm is particularly useful if a next navigation event is scheduled very soon, e.g. if some form of new navigation information such as a change of direction or the like, is to be provided to the user. In such situations, the output of additional information would only distract the user's attention from the new navigation information.

A second algorithm may be used if no navigation event is scheduled for the near future. In this case, additional information may be admitted to be provided to the user 200 alternatively to or in addition to the navigation information. Since no navigation event is scheduled for the near future, there is no danger of distracting the user's attention from new navigation information. Such time periods may be used for presenting additional information to the user, wherein said additional information may e.g. comprise tourist information and other location-based information (information related to points of interest nearby the current position).

According to a further embodiment, a third algorithm may provide for determining the vehicle's speed and controlling the amount of additional data depending on the vehicle speed. If the speed is below a predetermined threshold of e.g. 5 km/h or lower, the navigation system may conclude that the vehicle is in a stop-and-go situation, e.g. caused by a traffic jam. In these situations, a larger amount of additional information may be presented to the user because navigation information will not be required soon and the user (driver) can at least partly focus on the additional information because the traffic situation does not require his full attention.

According to a further embodiment, said additional information comprises at least one of: location-based information, news, advertising. If the navigation system 100 is integrated in a vehicle or another target system, the additional information i_a may also comprise any other operational data of said vehicle accessible by said navigation system for output to the user.

For example, the navigation system 100 may access via a CAN bus of the vehicle oil temperature data and information of an antilock braking system from respective electronic control units also connected to said CAN bus, and such information may also be provided to the user in addition to navigation information.

According to a further embodiment, a format of said navigation information and/or said additional information comprises at least one of: text, still images, video, audio, i.e. speech or music such as jingles related to specific advertisements.

To enable a particularly seamless integration of navigation information i_n and additional information i_a, said processing means 120 may be configured to blend in said additional information i_a into said navigation information i_n, which may in the case of video or still image information e.g. be accomplished by overlaying respective images or video signals. Audio information may be processed likewise.

A further preferred embodiment proposes that said navigation system 100, 100a is configured to receive said additional information i_a via said receiving means 130 from an external device, which may be identical with the external device 300 the information provisioning rules R are received from. Thus, an operator of the external device 300 may provide location-based information, e.g. news or advertising. At the same time, the operator may configure the navigation system / device 100, 100a by means of the information provisioning rules R. This way, the operator can e.g. influence how much and what type of advertising is provided in addition to "ordinary" navigation information.

Alternatively, the additional information i_a may be received from a further external device 300a which is different from the primary external device 300 that supplies the information provisioning rules R. A data connection to the further external device 300a may be realised in analogy to the interface 130a.

It is also possible to control the provisioning of said navigation information and/or said additional information to the user depending on further parameters such as weather conditions, transmission properties of the interface of the receiving means, and other parameters that may be gathered from a target system of the navigation system 100, 100a.

According to a further embodiment, said navigation system 100, 100a receives said additional information i_a via said receiving means 130 from an external device 300, 300a and at least temporarily stores said additional information i_a e.g. for output to the user 200 at a later time.

Since the details of the provisioning of the navigation information i_n and the additional information i_a to the user 200 as performed by the processing means 120 of the navigation system 100, 100a is inter alia determined by the rules R which are remotely controllable and alterable by an external control unit 300, it is advantageously possible to centrally define the rules R, for instance at the location of the control unit 300, and to distribute the rules R to a plurality of navigation systems 100, 100a from said location.

Figure 5a, 5b schematically depict a screen display obtained by further embodiments of the navigation system 100,100a , which realises a split-screen configuration presenting navigation information such as arrows and the like in a first screen portion 401n, while additional information such as advertisements 410a, 410b are presented in a second screen portion 401a. The split-screen configuration advantageously enables a simultaneous display of both navigation information and additional information. Nevertheless, as already explained above, the navigation system may output the respective information with different levels of perceptibility (e.g., by means of different color / black and white; contrast; intensity; transparency; animated content portions) for the user 200 in order to ensure that the user's attention is attracted by the currently more important contents.

The Figure 5a, 5b embodiments also enable a provisioning of information on the screen portion 401a, 401n depending on the information provisioning rules R as explained above. Insofar, an operator of the external device 300 (Figure 1) may control the way said information is provisioned.

The navigation system 100, 100a according to the above explained embodiments enables to present to a user 200, preferably a driver of a vehicle, instant and location-based information about a current situation on the streets, such as traffic jams, construction work, road blockings. Further, the navigation system 100, 100a enables to present to a user 200 up-to-date information about points of interest, fuel stations and prices, restaurants, and the like.

The navigation system 100, 100a may provide the above explained functionality or parts thereof by means of a so-called "Infoscreen application" which is e.g. executed by the processing means 120. The processing means 120 preferably also perform the processing of navigation algorithms which yield the navigation information output for the user. The "Infoscreen application" can advantageously also be used for providing additional information to the user, preferably advertising.

According to an embodiment, to ensure that a provisioning of navigation information i_n to the user 200 is not interrupted in situations where the driver needs full attendance on the traffic and requires instant access to the navigation information i_n, the processing means 120 enables to automatically (i.e. without user interaction) and intelligently switch between the display of navigation information and the display of other information such as provided by the "Infoscreen application", e.g. advertising.

Since in many countries there are legal requirements to be considered for the type of information displayed on the navigation screen, according to a further embodiment, it is advantageous to also implement such legal requirements into the rules R or the further rules R' of the navigation system 100, 100a, which determine the provisioning of navigation information i_n and additional information i_a to the user 200.

According to a further embodiment, the functionality related to the automatic and intelligent provisioning of information i_n, i_a to the user 200 depending on the rules R, R' and the parameters P may be implemented in the form of a "Context based Application Manager" (CAM). This CAM module, which may be a software module being executed by the processing means 120, cf. Figure 6, inter alia determines which information i_n, i_a is displayed in the foreground. This control path is indicated by the arrow 121 of Figure 6. The CAM may also support the display of several applications in parallel in some kind of split screen mode, cf. Figure 5a, 5b.

The CAM module may execute one or more algorithms, which decide which information is displayed on the screen.

If there are several applications being executed by the navigation system 100, 100a, 100b such as a first application for the purpose of navigation, and a second application for the purpose of generating additional information display, the CAM module may also decide which application (navigation or additional information display) may display its output on the screen 400.

According to a further embodiment, the decision on which information/application is shown on the screen 400 is derived from context information available in the vehicle. The context information may be represented by first parameters P1 such as a vehicle speed, other vehicle parameters that may be accessed by the processing means 120 via CAN bus.

Additionally, a navigation application executed by the processing means 120 or other processing means (not shown) may also provide parameters P2 depending on which the processing means 120 or the CAM module determine how and when to display which information.

Preferably, the rules R, that control the provisioning of information, and possibly also a) an operation of applications executed by the processing means 120, and b) the CAM module itself, are defined and modified centrally, e.g. at the control unit 300, which is a device external to and usually located remote from said navigation system 100, 100a, 100b.

Preferably, the rules R are periodically distributed from the control unit 300 to the systems and/or devices 100, 100a, 100b. So, advantageously, the control about the displayed information i_n, i_a is not alone at the end user 200 any more, which enables to inject advertising contents and other commercially useful information contents into the information stream provided by the navigation system 100, 100a, 100b to the user 200.

Moreover, the central definition of the rules R enables an efficient implementation and transmission to a plurality of navigation system 100, 100a, 100b, particularly if a wireless data transmission 130a (Figure 1) can be employed.

The embodiments of the navigation system 100, 100a, 100b advantageously enable to implement a combined PND and "Infoscreen" device, e.g. in a car, and they offer a navigation application plus the automatic and intelligent display of additional information i_a such as local point-of-interest description, news, advertising. The format of the information can be text, images, videos and further formats that may be output by associated output devices 400, 500.

According to an embodiment, to decide when the "Infoscreen" application or its information is displayed, i.e. output on the display 400, the CAM module collects context information from the PND and a car information system and other sources, cf. the arrows P1, P2. This information can e.g. comprise:
- Speed
- Location
- Map Infos, such as parking lot, traffic lights
- Route Destination
- Route Vias
- Time of Day, Date
- Country (Legal Environment)
- Time and distance to the next navigation event Additionally, application rules R' can be used by the CAM module to automatically switch or alter the display content. These rules can e.g. comprise:
- Application or its information output, respectively, must be in foreground in specific situations,
- Application or its information output, respectively, must not be in foreground in specific situations,
- Application or its information output, respectively, may be in the foreground,
- If and where "Infoscreen" content, i.e. additional information i_a, should be embedded in the navigation information i_n, (e.g., split-screen mode)
- Whether audio output of the navigation application is continued in "Infoscreen" mode, i.e. in such cases where additional information i_a is displayed with higher visual perceptibility than navigation information i_n,
- How long information i_n, i_a or a corresponding output of an application must be displayed after a switch between different rules, display algorithms, or screen contents,
- Whether another application that currently outputs information to the user 200 can be immediately interrupted by the CAM module, i.e. for instantly blending in important navigation information i_n.

The application rules R' may also be defined and modified centrally by a service operator and are distributed to the devices, e.g. via mobile network. Insofar, the application rules R' may be processed the same way as the information provisioning rules R.

According to a further embodiment, algorithms controlling an operation of the CAM module can be defined and modified centrally by a service operator and then be distributed to the devices 100, 100a, 100b, e.g. via mobile network.

According to a further embodiment, it is also possible to connect more than one display device 400 (Figure 3) to the navigation system 100, 100a, 110b. Such a multi-display configuration is particularly useful in combination with an in-car navigation system based on the inventive embodiments explained above. It is e.g. possible to simultaneously provide identical or different information on the different displays, wherein the same set of information provisioning rules R or further rules R' and parameters P, P1, P2 or different sets of rules R, R', and parameters P, P1, P2 may be employed for the different display devices 400.

For instance, a secondary display provided for a front or rear passenger of a vehicle may provide an increased degree of additional information i_a such as advertising during a cruise while a primary display 400 provided for the driver of said vehicle only provides a reduced degree - if any - of additional information i_a such as advertising at the same time in order not to distract the driver's attention to the traffic and important navigation information i_n. Moreover, it is also possible to coordinate the provisioning of information i_n, i_a on different displays 400 so as to ensure that in time periods that comprise important navigation events such as a turning instruction and the like, secondary displays or loudspeakers are muted or in any other way reduced in their audible and/or visible perceptibility so as to ensure that the driver is not distracted by information displayed by the secondary displays. This kind of coordination requires particularly few efforts if the processing means 120 (Figure 1) control the provisioning of information i_n, i_a to the various displays 400 in a central manner.

Of course, it is also possible to provide an embodiment of the navigation system with several processing means 120 each of which gets the rules R and possibly further "remote control" data from the receiving means 130 and each of which controls one or a specific group of displays in a dedicated manner. For instance, in the context of an in-vehicle navigation system, primary processing means 120 may control the provisioning of information i_n, i_a to a primary and secondary display of the vehicle's front row, which may be used by the driver and the co-driver, respectively, while secondary processing means may control the provisioning of information i_n, i_a to further displays arranged for output to the rear seat passengers.

It is also possible to provide a display dedicated for the output of additional information i_a such as advertising. Although the primary purpose of the displays 400 is the information of the vehicle's driver and other persons in the vehicle, it is also possible to provide display means in the vehicle capable of presenting visual and/or acoustic output to the outside area of the car.

According to a further embodiment, the communication between the devices 300 and 120, 130 is of a bidirectional type, e.g. the components 120, 130 of the navigation system 100, 100a, 100b may also transmit information to the external device 300. The processing means 120 may also be configured to receive user data input, wherein a bidirectional type of user interface 110 such as a touchscreen interface may be used.

The processing means 120 may also be configured to record usage patterns of the navigation system 100, 100a, 100b, possibly including location information and view rates. Such information is of high importance to the operator of the external device 300 or any other entity providing advertising and the like by means of the inventive embodiments.

It is also possible to provide various "channels" of additional information i_a to the user 200, which may e.g. be selected by the user 200 in a fashion similar to selecting television channels. E.g., the rules R may define to provide a first channel with additional information i_a comprising location-dependent advertisements on restaurants and to provide a second channel with additional information i_a comprising location-dependent advertisements on shopping facilities. By interacting with the system 100, 100a, 100b, e.g. by means of a touchscreen, the user may select one of those two advertisement channels. Of course, such user behaviour may also be recorded by the system 100, 100a, 100b or its processing means 120, and transmitted to the external device 300 for analysis.

Such recorded user data may also be used by the operator of the control unit 300 to monitor a proper contractual use of the system 100, 100a, 100b, which is particularly useful for commercial usage.

Especially for private users, such recorded information may also be anonymized, i.e. device specific data of the system 100, 100a, 100b and/or the vehicle and/or personal data of the user may be removed prior to transmitting the data to the control unit 300. Instead of a complete anonymization, it might also be sufficient to reduce the precision of recorded location data to some hundred meters or the like to prevent a precise tracking of the user or its vehicle. It is also possible to merely provide statistical data based on the user behavior which is transmitted to the control unit 300.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

According to a further embodiment, provisioning navigation information i_n to the user 200 may also comprise displaying a map or traffic information without an active routing process. I.e., the navigation information i_n or its provisioning does not necessarily comprise an active routing process. Such situations are particularly useful for adding additional information i_a, because no navigation events are to be expected and even interruptions of the map display for blending in advertisements can be tolerated. The mere map display also represents a form of navigation information i_n in the present sense.

## Claims

1. Navigation system (100) comprising user interface means (110) for providing navigation information (i_n) and additional information (i_a) to a user (200) of said navigation system (100), and processing means (120) for controlling the provisioning of said information (i_n, i_a) to the user (200) via said user interface means (110), wherein said navigation system (100) further comprises receiving means (130) for receiving information provisioning rules (R), which comprise information on how to provide said navigation information (i_n) and/or said additional information (i_a) to said user (200), from a device (300) external to the navigation system (100), and wherein said processing means (120) are configured to control the provisioning of said navigation information (i_n) and/or said additional information (i_a) to said user (200) depending on said information provisioning rules (R) received from said external device (300).

2. Navigation system (100) according to claim 1, wherein said receiving means (130) comprise an interface capable of wireless and/or wired data transmission with said external device (300).

3. Navigation system (100) according to one of the preceding claims, wherein said user interface means (110) comprise an interface for transmitting video and/or audio data to a video output device (400) and/or an audio output device (500).

4. Navigation system (100a) according to one of the preceding claims, wherein said navigation system (100a) comprises an integrated video output device (400) and/or audio output device (500).

5. Navigation system (100, 100a) according to one of the preceding claims, wherein said processing means (120) are configured to control the provisioning of said navigation information (i_n) and/or said additional information (i_a) to said user (200) depending on further parameters (P) of said navigation system (100, 100a), said parameters comprising at least one of:
- a current speed of said navigation system (100, 100a) or of a target system comprising said navigation system (100, 100a),
- a position,
- map information of the navigation system (100, 100a) on points of interest, parking lots, traffic signs and other location-based data provided for by the navigation system (100, 100a),
- a route destination and/or other elements of a current route specified for navigation,
- a time and/or date,
- a country or other legal environment the current position relates to,
- a time and/or distance to a next navigation event.

6. Navigation system (100, 100a) according to one of the preceding claims, wherein said processing means (120) are configured to control the provisioning of said navigation information (i_n) and/or said additional information (i_a) to said user (200) depending on further rules (R'), said further rules (R') determining:
a. that said navigation information (i_n) is provisioned with a higher or lower degree of perceptibility for the user as compared to the additional information (i_a),
b. if and where said additional information (i_a) is to be embedded or blended in to the navigation information (i_n).

7. Navigation system (100, 100a) according to one of the preceding claims, wherein said processing means (120) are configured to embed additional information (i_a) in said navigation information (i_n) by overlaying respective video signals and/or audio signals corresponding to said additional information (i_a) and said navigation information (i_n).

8. Navigation system (100, 100a) according to one of the preceding claims, wherein said additional information (i_a) comprises at least one of: location-based information, news, advertising.

9. Navigation system (100, 100a) according to one of the preceding claims, wherein a format of said navigation information (i_n) and/or said additional information (i_a) comprises at least one of: text, still images, video, audio.

10. Navigation system (100, 100a) according to one of the preceding claims, wherein said processing means (120) are configured to blend in said additional information (i_a) into said navigation information (i_n).

11. Navigation system (100, 100a) according to one of the preceding claims, wherein said navigation system (100, 100a) is configured to receive said additional information (i_a) via said receiving means (130) from an external device (300, 300a).

12. Control unit (300) for controlling at least one navigation system (100, 100a) according to one of the preceding claims, wherein said control unit (300) comprises an interface (310) capable of wireless and/or wired data transmission with said navigation system (100, 100a), and wherein said control unit (300) is configured to: a) transmit information provisioning rules (R), which comprise information on how to provide navigation information (i_n) and/or additional information (i_a) to a user (1000) of said navigation system (100, 100a), to said navigation system (100, 100a), and/or to b) alter information provisioning rules (R) of said navigation system (100, 100a).

13. Method of operating a navigation system (100) comprising user interface means (110) for providing navigation information (i_n) and additional information (i_a) to a user (200) of said navigation system (100), and processing means (120) for controlling the provisioning of said information (i_n, i_a) to the user (200) via said user interface means (110), wherein said navigation system (100) receives (1000) information provisioning rules (R), which comprise information on how to provide said navigation information (i_n) and/or said additional information (i_a) to said user (200), from a device (300) external to the navigation system (100), by means of receiving means (130), and wherein said processing means (120) control (1010) the provisioning of said navigation information (i_n) and/or said additional information (i_a) to said user (200) depending on said information provisioning rules received from said external device (R).

14. Method according to claim 13, wherein said navigation system (100, 100a) receives said additional information (i_a) via said receiving means (130) from an external device (300, 300a), and wherein said navigation system (100, 100a) at least temporarily stores said additional information (i_a).

15. Method according to claim 14, wherein said processing means (120) embed said additional information (i_a) in said navigation information (i_n) by overlaying respective video signals and/or audio signals corresponding to said additional information (i_a) and said navigation information (i_n).
